Europäisches Patentamt

European Patent Office

Office européen des brevets

(19)

(11)    EP 0 848 488 A1

## (12)    EUROPEAN PATENT APPLICATION

(43) Date of publication:
    17.06.1998  Bulletin 1998/25

(51) Int. Cl.⁶: $H02P\ 1/00$, $H02P\ 6/08$

(21) Application number: 96830622.5

(22) Date of filing: 13.12.1996

(84) Designated Contracting States:
    DE FR GB IT

(71) Applicant:
    SGS-THOMSON MICROELECTRONICS s.r.l.
    20041 Agrate Brianza (Milano) (IT)

(72) Inventors:
• Maiocchi, Giuseppe
    22079 Villa Guardia (IT)
• Galbiati, Ezio
    26020 Agnadello (IT)

(74) Representative:
    Pellegri, Alberto et al
    c/o Società Italiana Brevetti S.p.A.
    Via Puccini, 7
    21100 Varese (IT)

(54)    **Method of driving a multiphase brushless DC motor and output stage**

(57)    Each phase winding of a brushless DC multiphase motor is singularly driven through a full bridge output stage by arranging for the connectability of both terminals of each winding. Such a scheme increases the maximum attainable speed by excluding BEMF contributions from other windings without increasing the torque "ripple" and without reducing torque at the motor's shaft as is the case when switching to a unipolar driving mode for reaching maximum speed. The doubling of the number of output power transistors is more than compensated by the possibility of making them smaller than the transistors that would be required according to a conventional scheme, for the same torque requirement.

FIG. 8

FIG. 9

Six Wires
Spindle Motor

EP 0 848 488 A1

## Description

<u>Field of the invention</u>

The present invention relates to techniques for high speed driving an electronically switched DC motor, commonly referred to as "brushless".

<u>Background of the invention</u>

Electronically switched DC motors are used in innumerable control and regulation applications and also in a rotating peripherals such as mass memory drive systems like hard disks, floppy disks, optical disks and CD-ROMs drives as well as in tape streamers and the like, all generally requiring higher an higher speed.

Althought these systems may be easily designed for extremely high speed, the inductive character of the electric load represented by the phase windings of the motor, the inertial characteristics of the rotor and of the rotating mass pose limitations and create technological problems to the realization of motors capable of being correctly controlled at ever increasing speeds.

Despite of the fact that electronically switched systems for brushless DC motors may be designed for a higher number of phase windings, quite common is the case of a brushless motor having three phase windings connected in a star configuration and defining six different switching phases and a P number of poles. In this case, there will be a number $3*P$ of equilibrium points in a complete revolution of the rotor.

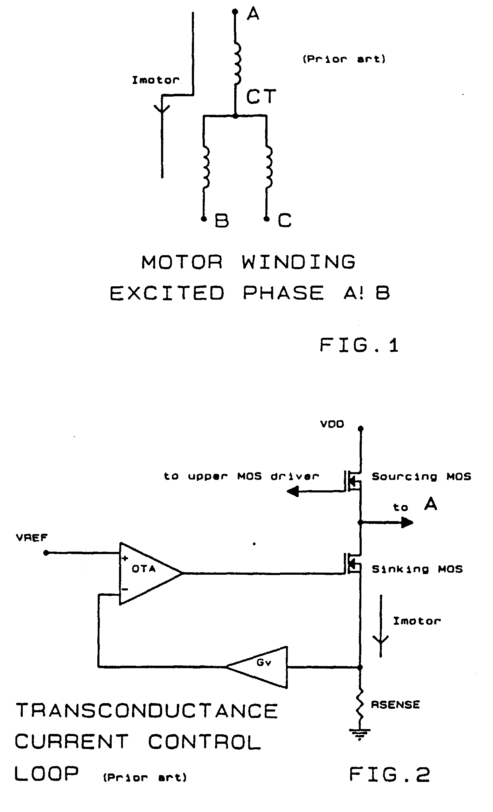

In the present text, each excitation phase will be indicated according to a standard notation by two capital letters. The first capital letter (for example, A, B or C) defines the winding through which the current conventionally flows from the respective supply terminal towards the star center (CT) and the second capital letter, preceded by the sign (!), designates the winding through which the current, conventionally coming from the star center, flows toward the supply terminal of the relative winding. For instance, the scheme of the excitation phase A!B is shown in Fig. 1.

These brushless motors are commonly driven by an integrated circuit whose output stage is represented by a polyphase full-wave bridge circuit, which in the case of a three-phase motor may employ six bipolar (BJT) or field effect transistors (MOS) power transistors. Commonly the motor current is linearly controlled through a transconductance loop or by PWM.

During a certain switching phase of the motor, the "sourcing" power transistor is forced into full conduction (that is to saturation in case of an MOS device) whereas the "sinking" power transistor operates as a transconductance element, according to the scheme of Fig. 2, which refers to the use of MOS type power devices.

Electronically switched DC motors permit to control the rotation according to different modes. Some of these control modes are described in the European applications No. 96830440.2, filed on 1 August 1996, No. 96830295.0, filed on 22 May 1996, and No. 96830180.4 filed on 29 March 1996, in the name of the same applicant.

During each switching phase, a voltage or current control mode may involve the driving of the motor windings at with a constant or with a varying current.

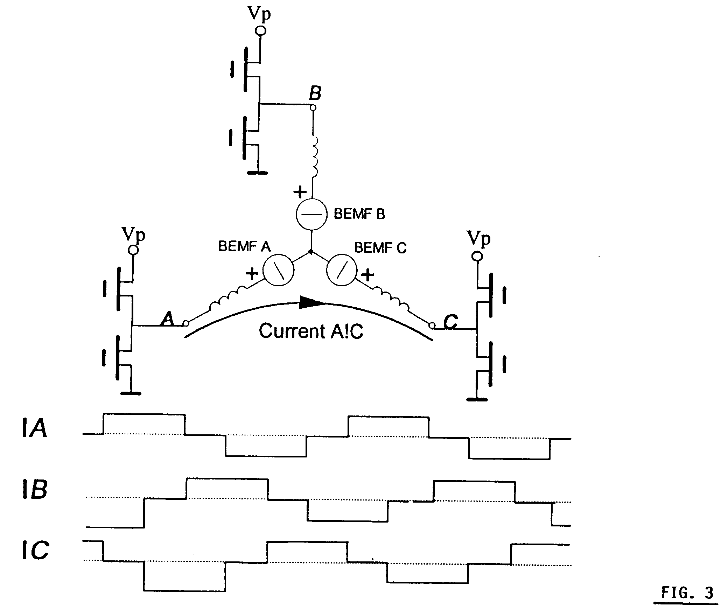

The case of a three windings DC motor, driven according to a constant current control mode, implies the excitation of two windings during each switching phase while a third winding remains disexcitated, according to a scheme shown in Figure 1 and in more details in Figure 3, which also shows the sequences of the three constant currents that are forced through the respective windings. This driving scheme whereby at any instant the current flows into two windings out of three is often referred to as "bipolar".

In the electric scheme of Figure 3, besides the three power stages that drive the respective windings A, B, C, the voltage generator symbols BEMFA, BEMFB and BEMFC designates the voltages that are induced in the motor windings by the rotor rotation.

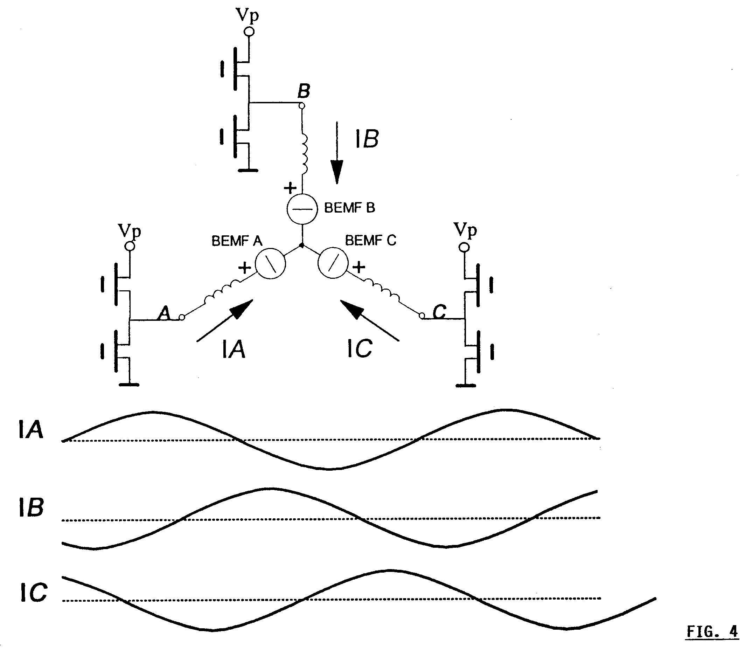

By contrast, Figure 4 shows the electric scheme and the relative wave forms of the three currents of varying intensity during each phase that are forced through the motor windings according to a "tripolar" driving mode. In a tripolar mode all three windings are crossed by a current during each switching phase. In the figure the wave forms of the driving currents are sinusoidal, though they can have any other different periodic form, resulting for example from a sum of harmonics.

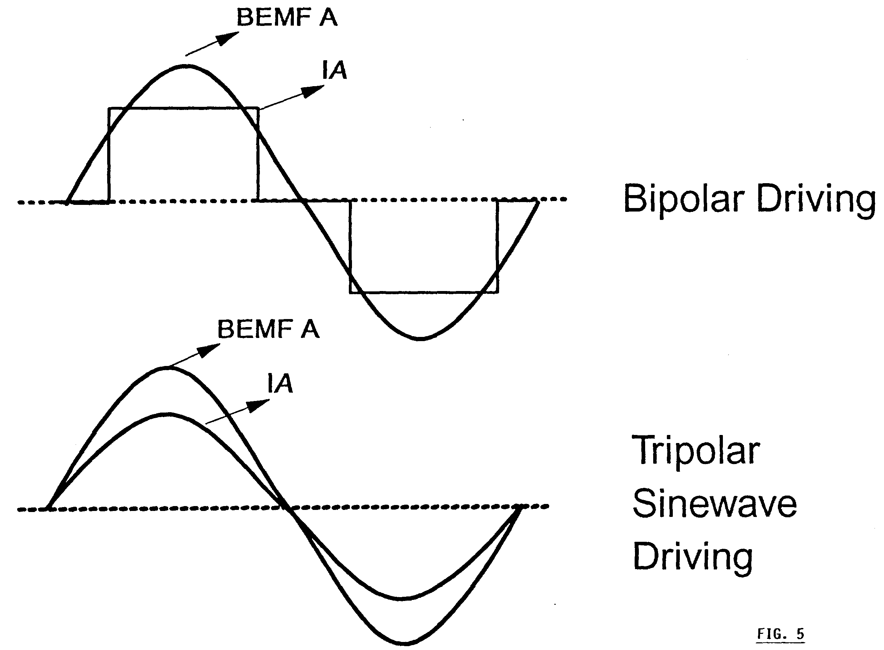

In any case, an important aim is that of minimizing the torque "ripple" at the motor's shaft and usually this condition is attained when the current crossing each winding is in phase with the respective back electromotive force induced on the same winding, as shown in the diagrams of Figure 5, relative to a bipolar and tripolar driving mode.

By designating Tload as the torque that the motor needs to produce for reaching a certain rotational speed, the motor will accelerates until the generated torque Tmotors remains greater than Tload. The motor ceases to accelerate when Tmotor=Tload and this condition identifies the maximum speed that can be achieved by the motor.

If:

$$Tmotor = Kt * Imotor$$

then the excitation current is given by:

$$Imotor = (Vpower-BEMFtot)/Rtot$$

where Kt is a motor constant, Vpower is the supply voltage of the motor, BEMFtot is the total contribution of the back electromotive force generated in the windings of the motor and Rtot indicates the total resistance as measured at the windings terminals.

Under this condition, the maximum speed is ideally reached when the following equation is verified

$$(Kt/Rtot)*(Vpower-BEMFtot)=Tload$$

this meaning that the motor accelerates until the BEMFtot reaches the BEMFmax value:

$$\omega max = (BEMFmax / Kt)$$

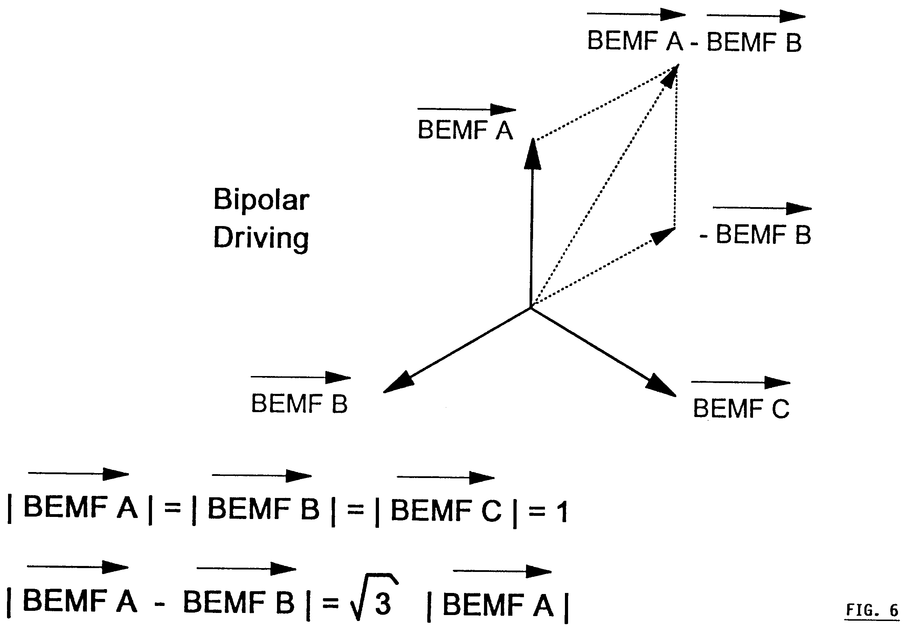

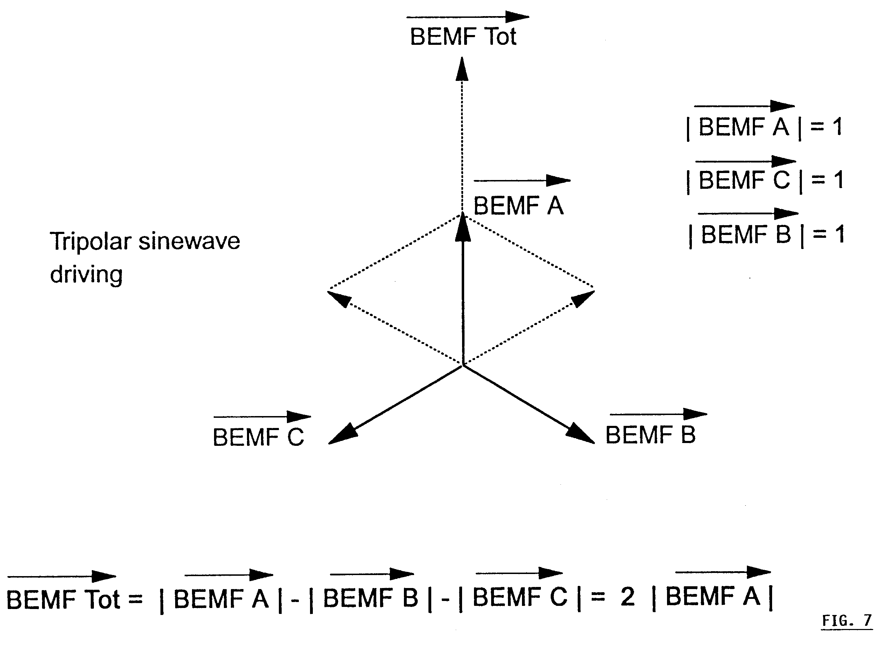

In the above equation the value of BEMFtot is the result of the vectorial sum of the single contributions of the induced voltages BEMFA, BEMFB and BEMFC generated on the respective windings, as shown in Figures 6 and 7.

In case of a "bipolar" driving mode we would have:

$$| BEMFtot = BEMFA-BEMFB | = 3 * BEMFA$$

whereas, in a "tripolar" driving mode:

$$| BEMFtot = BEMFA - BEMFB | = 2 * BEMFA$$

In both cases, the maximum speed is limited by the module resulting from the vectorial sum of the single BEMF contributions generated in all the motor windings that are crossed by the current forced by the driving circuit.

Therefore, the maximum speed that may be reached depends on how much the above mentioned vectorial sum is minimized.

In order to achieve the highest speed, the current that flows in any motor winding should advantageously be limited by the sale BEMF that is generated on the same winding.

## Discussion of the prior art

In order to fulfill this requisite, state-of-the-art technology substantially offers two alternatives.

The first consists of starting the motor in a "bipolar" mode and thereafter switch to a "unipolar" driving mode when the motor reaches a pre-established speed. This type of solution has the disadvantage of producing a relatively small torque at the motor's shaft and an accentuated ripple if compared to the torque and ripple produced by continuing to drive the motor in a bipolar mode.

Moreover, the particular excitation and disexitation switching of the windings in a unipolar driving mode generates a flyback effect that produces a relatively high induced voltage on the winding terminals of the motor. This induced voltage may reach in these cases about twice the value of the supply voltage and this requires the use of an appropriately high voltage output stage and/or an effective external protection circuit.

An alternative known solution is that of reaching the specified speed by increasing the supply voltage by means of a dedicated step-up circuit. This alternative solution while permitting to maintain a "tripolar" or a "bipolar" driving mode has the drawback of increasing the total consumption of energy beside the fact of requiring several external components.

## Objectives and summary of the invention

Thence, there exists the need or usefulness of reaching high speed performances comparable to those attainable with a "unipolar" driving mode without an intolerable increment of the torque ripple while ensuring a high torque even at high speeds.

This objective is fully attained through the method and circuit of the present invention.

Essentially, the method of the invention consists in driving each phase winding of the motor through a bridge circuit functionally connected between a supply node and a common ground node.

Though requiring access to both terminals of each phase winding of the motor for connecting to the respective bridge circuit, and doubling the number of power devices, the system of the invention produces outstanding performances in terms of maximum attainable speed and torque, otherwise not reachable by the systems made according to the first of the above described known approaches, or that may be equaled only with rather burdensome and expensive means according to the second of the above described known approaches.

## Brief description of the drawings

Figure 1, as already described, shows in a schematic manner the meaning of the notations used in the present context.

Figure 2, is a functional scheme of a transconductance control loop of the driving current, according to the prior art, as already described above.

Figure 3, as already described, shows the electric scheme and relative waveforms of the currents that are forced through the windings of the motor according to a bipolar driving mode.

Figure 4, as already described, shows the electric scheme and relative waveforms of the currents that are forced through the windings of the motor according to a tripolar driving mode.

Figure 5, as already described, shows the in-phase condition that guarantees the maximum torque, in the case of driving the motor in a bipolar or tripolar mode, using sinusoidal currents.

Figures 6 and 7 show as many vectorial schemes relative to the case of a bipolar and of a tripolar driving mode.

Figure 8 depicts the electric driving scheme of three motor's windings according to the present invention.

Figure 9 is a scheme that shows the need of accessing both terminals of each winding of the motor in order to realize a driving circuit as that shown in Figure 8.

Figure 10 shows the relative electric scheme and waveforms of the currents and voltages in case of a bipolar driving mode.

Figure 11 show the electric driving scheme and waveforms of the currents and voltages in case of a tripolar driving mode, using sinusoidal currents.

Detailed decription of the invention

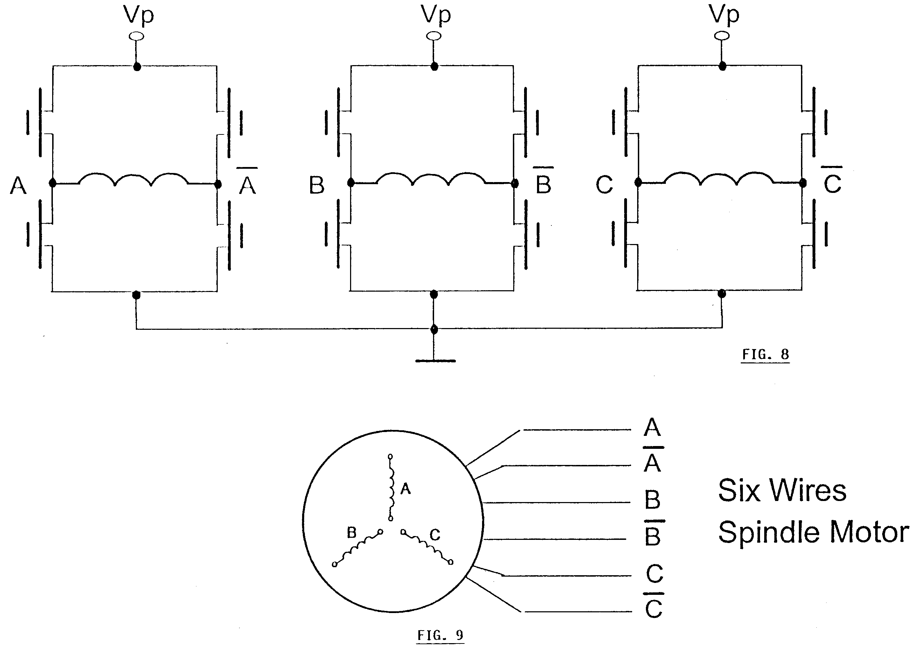

With reference to Figure 8, a fundamental aspect of the invention consists in that the three motor's windings are not linked in a star configuration to a star center node (CT) as in known systems, but rather, each winding is independently driven by a bridge circuit, constituted by 4 power devices.

Of course this crucial aspect of the invention implies the need of accessing both terminals of each winding in order to connect it to the respective driving bridge according to the electric scheme of Figure 8. As schematized in Figure 9, this requires six linking wires in case of a three winding motor.

According to the invention, the current that is forced through each winding of the motor is limited by the effect of a single BEMF (back electromotive force) that is generated on the same winding, In practice we may write:

$$BEMFtot=BEMFA=BEMFB=BEMFC$$

As a result, the motor reaches the highest speed, exactly as in the case of a unipolar driving mode.

It may be easily demonstrated that the maximum attainable speed is higher by a factor of $\sqrt{3}$ if compared to that attainable with a bipolar driving mode and by a factor of 2 if compared to that attainable with a tripolar driving mode, implemented, according to known electric schemes, by three push-pull output stages

Therefore, a first important result achieved by the system of the invention is that of satisfying the requisites of maximum speed without requiring expensive architectures capable of automatically switching the driving to a unipolar mode or of increasing the supply voltage according to an alternative known approach.

Another important aspect of the driving system of the invention is represented by the fact that it doubles the excitation dynamics. In other words, while in known systems each winding is excited with a dynamics (output voltage swing) substantially equivalent to a half of the supply voltage, in the system of the invention each winding is driven with a dynamics that practically corresponds to the entire supply voltage.

The increased driving dynamics increases the current that can be forced through each winding and therefore the torque that is produced at the motor's shaft.

Should be necessary to maintain unvaried the torque at the motor's shaft to that attainable in case of a normal bipolar driving mode according to the prior art, the effective current through the windings may be reduced by increasing the resistance RDSon of the MOS devices of the bridge circuits. In practice, this is attainable by reducing the size of the power MOS devices.

Therefore, to ensure the same torque at the motor's shaft, the system of the invention requires twelve power devices instead of the six needed according to a known driving scheme. Although requiring a double number of power devices, the area of integration that would be required is comparable to the area of integration needed by the six power devices of the prior art each of which must carry twice the current that is carried by each of the twelve devices according to the driving scheme of the invention.

By contrast, if an increased torque at the motor's shaft is accounted for, the proposed solution of the invention would produces a faster motor start up.

A further option offered by the invention is that of modifying the windings in a way of increasing the number of turns thereof and reducing in this way the start up current required to ensure a certain start up speed while preserving the ability of reaching maximum speed.

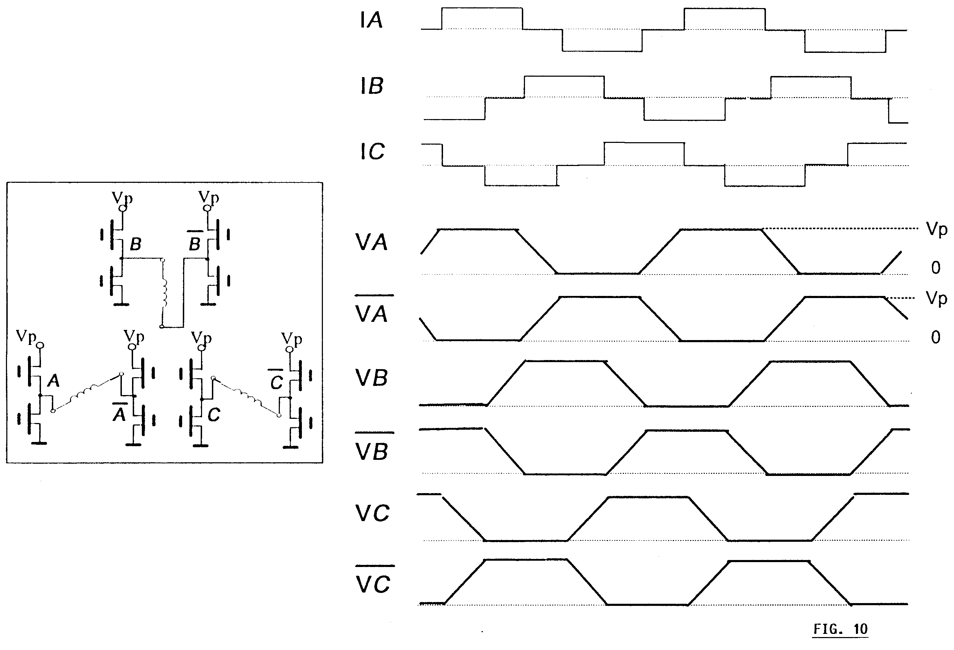

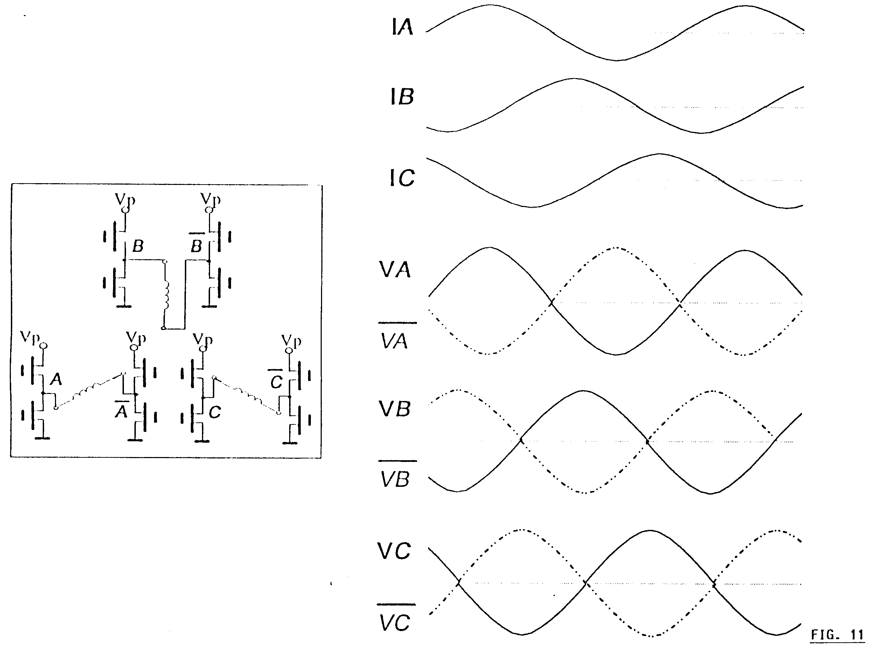

Of course, the method and the driving circuit of the invention permit to implement either a bipolar or a tripolar driving mode, as shown in Figures 10 and 11, respectively.

In case of a tripolar driving mode the control circuits described in either of the European patent applications No. 96830440.2, No. 96830295.0 and No. 96830190.3 are adequate and particularly effective.

**Claims**

1.  Method for driving a brushless DC multiphase motor having a plurality of phase windings, characterized in that it comprises

    driving each phase windings through a bridge circuit functionally connected between a supply node and a common ground node.

2.  The method according to claim 1, characterized in that each bridge circuit is constituted by four field effect power transistors.

3.  The driving method according to claim 2, characterized in that said field effect transistors that form said bridge circuits are driven to full saturation.

4.  The driving method according to claim 1, characterized in that the phase windings are three.

5.  The method according to claim 4, characterized in that the driving is performed in a bipolar mode.

6.  The method according to claim 4, characterized in that the driving is performed in a tripolar mode.

7. A driving circuit for a brushless DC multiphase motor, having a plurality of phase windings, characterized in that it comprises a full bridge output stage for each winding of the motor composed of four power transistors controlled in phase opposition by pairs, each pair being composed of a power transistor switching to a supply node and by a power transistor switching to a common ground node of the phase winding terminals.

8. The driving circuit according to claim 7, characterized in that said power transistors are field effect transistors controlled to full saturation by relative control signals.

A

(Prior art)

Imotor

CT

B    C

MOTOR WINDING
EXCITED PHASE A! B

FIG.1

VDD

to upper MOS driver    Sourcing MOS

to    A

VREF

OTA    Sinking MOS

Imotor

Gv

TRANSCONDUCTANCE
CURRENT CONTROL
LOOP (Prior art)    RSENSE

FIG.2

6

FIG. 3

FIG. 4

BEMF A

IA

Bipolar Driving

BEMF A

IA

Tripolar
Sinewave
Driving

FIG. 5

EP 0 848 488 A1

EP 0 848 488 A1

BEMF A - BEMF B

BEMF A

Bipolar
Driving

- BEMF B

BEMF B

BEMF C

$$\mid \text{BEMF A} \mid = \mid \text{BEMF B} \mid = \mid \text{BEMF C} \mid = 1$$

$$\mid \text{BEMF A} - \text{BEMF B} \mid = \sqrt{3} \quad \mid \text{BEMF A} \mid$$

FIG. 6

Tripolar sinewave
driving

$$|\text{BEMF A}| = 1$$

$$|\text{BEMF C}| = 1$$

$$|\text{BEMF B}| = 1$$

BEMF Tot

BEMF A

BEMF C

BEMF B

$$\text{BEMF Tot} = |\text{BEMF A}| - |\text{BEMF B}| - |\text{BEMF C}| = 2 \, |\text{BEMF A}|$$

FIG. 7

EP 0 848 488 A1

FIG. 8

FIG. 9

Six Wires
Spindle Motor

FIG. 10

FIG. 11

European Patent
Office

**EUROPEAN SEARCH REPORT**

Application Number

EP 96 83 0622

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 511 392 A (KABUSHIKIGAISHA SEIKOGIKEN) 4 November 1992<br>* page 4, line 10 - line 14; figure 3 *<br>* page 5, line 20 - line 23 *<br>--- | 1,2,4,7 | H02P1/00<br>H02P6/08 |
| X | WO 93 09595 A (EML RESEARCH, INC.) 13 May 1993<br>* page 9, line 18 - line 34; figure 3 *<br>* page 17, line 3 - line 5; figure 5 *<br>--- | 1,4,6,7 | |
| X | EP 0 501 398 A (KOLLMORGEN CORPORATION) 2 September 1992<br>* column 1, line 10 - line 32 *<br>* column 10, line 9 - line 10 *<br>--- | 1-8 | |
| A | CONTROL ENGINEERING,<br>vol. 37, no. 4, 1 March 1990,<br>page 94/95 XP000113049<br>COMSTOCK R H: "COMPARING TRAPEZOIDAL AND SINUSOIDAL SERVO CONTROLLERS"<br>----- | | |
| | | | TECHNICAL FIELDS SEARCHED (Int.Cl.6)<br><br>H02P |

The present search report has been drawn up for all claims

| Place of search | Date of completion of the search | Examiner |
|---|---|---|
| BERLIN | 9 May 1997 | Leouffre, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)